(19) Europäisches Patentamt / European Patent Office / Office européen des brevets

(11) **EP 4 442 873 A1**

(12) **EUROPEAN PATENT APPLICATION**
published in accordance with Art. 153(4) EPC

(43) Date of publication:
**09.10.2024 Bulletin 2024/41**

(21) Application number: **22898571.9**

(22) Date of filing: **22.11.2022**

(51) International Patent Classification (IPC):
***D01F 6/60*** *(2006.01)*

(52) Cooperative Patent Classification (CPC):
**D01F 6/60**

(86) International application number:
**PCT/JP2022/043168**

(87) International publication number:
**WO 2023/095788 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2021 JP 2021192795**

(71) Applicant: **Toray Industries, Inc.**
**Tokyo 103-8666 (JP)**

(72) Inventors:
• **YAMAMOTO, Takeo**
  **Okazaki-shi, Aichi 444-8522 (JP)**
• **NAGASE, Akimi**
  **Okazaki-shi, Aichi 444-8522 (JP)**

(74) Representative: **Mewburn Ellis LLP**
**Aurora Building**
**Counterslip**
**Bristol BS1 6BX (GB)**

(54) **POLYAMIDE FIBER**

(57) This polyamide fiber is characterized by comprising a polyamide resin obtained by polycondensation of an aliphatic diamine and a dicarboxylic acid, and is characterized in that the aliphatic diamine and/or the dicarboxylic acid is a straight-chain monomer having a carbon chain of at least C9, the biobased content as measured in accordance with the standard ASTM D6866 is at least 50%, and formulae (1) and (2) are satisfied: (1) 1.0 $\leq$ boiling water shrinkage rate [%] $\leq$ 5.0; (2) -1.5 $\leq$ boiling water shrinkage rate [%] - dry heat shrinkage rate [%] $\leq$ 1.5. Provided is a fiber which, even having biomass plastic used therein, has a high strength, and by which a processed state similar to that of conventional fibers when processed into a woven knitted product is obtained by setting a boiling water-dry heat shrinkage rate to fall within a predetermined range.

EP 4 442 873 A1

**Description**

TECHNICAL FIELD

The present invention relates to a fiber using a biomass-derived plastic (hereinafter referred to as "biomass plastic") and a woven fabric using the fiber.

BACKGROUND ART

With the recent increase in environmental problems on a global scale, the influence of plastics on the environment has been increasingly emphasized. With the depletion of petroleum resources due to the large consumption of plastic products and the increase in global population, an increase in carbon dioxide emission due to the combustion treatment of plastic products after use due to an increase in the amount of plastic products used is expected, and it is considered that the environmental load tends to increase. In the present day in which global environmental load reduction is required, as a material that can achieve environmental load reduction by using plant resources that take carbon dioxide from the atmosphere and grow as raw materials, plastics starting from plant resources, that is, biomass plastics, have attracted attention, and research and development of various plastics such as aliphatic polyesters and fibers thereof (biobased fibers) have been activated.

However, various properties such as mechanical properties and heat resistance of biobased fibers are lower than those of conventional (petroleum-derived) fibers distributed in the market such as polyester fibers and polyamide fibers, and applications thereof are considerably limited. Whether the fiber is derived from a plant can be clearly distinguished with the development of technology, and ASTM D6866 is currently recognized as a main criterion, but the market demand of the biobased fibers itself is still small, and the biobased fibers are not widely recognized.

Although the biobased fibers are environmentally excellent, the reason why the market demand does not increase is that the fibers cannot be applied to woven and knitted fabrics due to the problem that the boiling water-dry heat shrinkage rate required for woven fabrics is not stable as exemplified in Patent Documents 1 and 2 while the strength is low, thus the fibers are mostly used in applications in which fibers are used individually, such as artificial hair, as in Patent Document 3, and the demand is small, so that the fibers are not fully spread.

The biobased fibers presented in Patent Documents 4 and 5 can withstand the market demand from the viewpoint of high strength while using a biomass plastic, but shrinkage is also a problem, and application to woven and knitted fabrics is limited.

PRIOR ART DOCUMENTS

PATENT DOCUMENTS

Patent Document 1: Japanese Patent Laid-open Publication No. 2000-154426
Patent Document 2: Japanese Patent Laid-open Publication No. 2016-203777
Patent Document 3: Japanese Patent Laid-open Publication No. 2019-065433
Patent Document 4: Japanese Patent Laid-open Publication No. 2013-049930
Patent Document 5: Japanese Patent Laid-open Publication No. 2019-148016

SUMMARY OF THE INVENTION

PROBLEMS TO BE SOLVED BY THE INVENTION

An object of the present invention is to provide a fiber that, even having biomass plastic used therein, has a high strength, and by which a processed state similar to that of conventional fibers when processed into a woven or knitted fabric is obtained by setting a boiling water-dry heat shrinkage rate to fall within a predetermined range.

SOLUTIONS TO THE PROBLEMS

The present invention provides a polyamide fiber containing a polyamide resin obtained by polycondensation of an aliphatic amine and a carboxylic acid, in which the aliphatic amine and/or the carboxylic acid is a straight-chain monomer having a carbon chain of C9 or more, the biobased content as measured in accordance with the ASTM D6866 standard is 50% or more, and following Formulae (1) and (2) are satisfied.

$$(1)\ 1.0 \leq boiling\ water\ shrinkage\ rate\ [\%] \leq 5.0$$

$$-1.5 \leq boiling\ water\ shrinkage\ rate\ [\%] - dry\ heat\ shrinkage\ rate\ [\%] \leq 1.5 \tag{2}$$

The polyamide fiber according to the above, satisfying following Formulae (1) to (3).

$$(1)\ 6 \leq tensile\ strength\ [cN/dtex] \leq 10$$

$$(2)\ 15 \leq tensile\ elongation\ [\%] \leq 35$$

$$(3)\ 2.5 \leq sulfuric\ acid\ relative\ viscosity \leq 4.5$$

In addition, the birefringence $\Delta n$ is in the range of $40 \times 10^{-3} \leq \Delta n \leq 70 \times 10^{-3}$.

In addition, the melt flow rate (MFR) value as measured by an MFR measurement by adding 0.00 to 3.00% of moisture and melting the mixture at a temperature of the melting point + 25°C reaches a minimum value in the moisture content range of 0.50 to 2.50%.

In addition, the crystal size (major axis portion) determined by X-ray diffraction is 5 nm or more.

In the polyamide fiber, the polyamide resin is nylon 410.

Also provided is a woven fabric for an airbag, including the polyamide fiber above.

Also provided is a tire cord including the polyamide fiber above.

Also provided is a racket string including the polyamide fiber above.

Also provided is a V-ribbed belt including the polyamide fiber above.

Also provided is a woven fabric for a bag fabric, including the polyamide fiber above.

Also provided is a woven fabric for a garment, including the polyamide fiber above.

EFFECTS OF THE INVENTION

According to the present invention, as described below, it is possible to provide a polyamide fiber capable of providing a processed state similar to that of conventional fibers while achieving a reduction in environmental load. As a result, the applications can be widely expanded to clothing applications (such as sports clothing such as swimsuits and skiwear, underclothes such as stockings and underwear, and outer clothing such as down jackets and suits) and industrial materials (such as automobile materials such as airbags and tire cords, outdoor materials such as tents and sleeping bags, and general materials such as bag fabrics and purses). Therefore, the polyamide fiber of the present invention is extremely useful for woven and knitted fabrics.

EMBODIMENT OF THE INVENTION

Hereinafter, an embodiment of the present invention will be described.

The polyamide resin used in the present invention is a polyamide resin obtained by polycondensation of an aliphatic diamine and a dicarboxylic acid, in which one or both of the aliphatic diamine and the dicarboxylic acid have a linear carbon chain having nine (C9) or more carbon atoms, and the aliphatic diamine and the dicarboxylic acid are polymerized.

In addition, the polyamide resin preferably has a biobased content according to the ASTM D6866 standard of 50% or more. Thereby, the fiber of the present invention can have a biobased content according to the ASTM D6866 standard of 50% or more. The biobased content of the polyamide resin is more preferably 60% or more, still more preferably 70% or more.

Examples of the aliphatic dicarboxylic acid having a linear carbon chain include chain aliphatic dicarboxylic acids such as adipic acid, suberic acid, azelaic acid, sebacic acid, dodecanedioic acid, tetradecanedioic acid, and hexadecanedioic acid, and at least one thereof may be selected and used in combination. More preferably, the linear aliphatic dicarboxylic acid having 9 or more carbon atoms is used, and the biobased content according to the ASTM D6866 standard is 50% or more. Examples thereof include sebacic acid derived from castor oil obtained from castor beans or the like.

Examples of the aliphatic diamine having a linear carbon chain include at least one selected from saturated aliphatic diamines such as diaminobutane, diaminopentane, diaminohexane, diaminodecane, diaminoundecane, and diaminododecane, and the biobased content according to the ASTM D6866 standard is preferably 50% or more.

Incidentally, the biobased contents of the aliphatic dicarboxylic acid and the aliphatic diamine, which are raw materials, only need to be 50% or more when the aliphatic dicarboxylic acid and the aliphatic diamine become a polyamide resin, and for example, a combination of an aliphatic dicarboxylic acid having a biobased content of 100% and an aliphatic diamine having a biobased content of 0% (or a reverse combination thereof) may be used.

The method for producing the polyamide resin by polymerizing the aliphatic diamine and the dicarboxylic acid is not particularly limited, but it is preferable to use a thermal melt polymerization method. The thermal melt polymerization method is a method in which an aqueous solution or a suspension in water of a dicarboxylic acid and a diamine, or an aqueous solution or a suspension in water of a mixture of a dicarboxylic acid, a diamine salt, and another component is heated, and polymerization is performed while maintaining a molten state. The polymerization form may be a batch type or a continuous type. Examples of the polymerization apparatus include an autoclave reactor, a tumbler reactor, and an extruder reactor such as a kneader.

The polyamide resin may contain, for example, 10 mol% or less of another copolymerization component as long as the effects of the present invention are not impaired, but when the polyamide resin contains a large amount of the same units, the regularity of the molecular chains of the resulting fiber is enhanced, and oriented crystallization in the yarn making process is facilitated, so that fibers excellent in mechanical properties, boiling water shrinkage rate, and further dry heat shrinkage rate are obtained, which is preferable. The content of the same units is more preferably 95 mol% or more, still more preferably 98 mol% or more.

The polyamide resin used in the present invention preferably has a sulfuric acid relative viscosity, which is an index of the molecular weight, of 2.5 or more and 5.0 or less. The higher the sulfuric acid relative viscosity, that is, the larger the molecular weight, the higher the strength of the resulting fiber because the molecular chains are uniformly oriented in the fiber production process, which is preferable. On the other hand, when the sulfuric acid relative viscosity is in an appropriate range, melt spinning at an appropriate spinning temperature becomes possible, and thermal decomposition of the polymer in the spinning machine is suppressed, so that yarn processability is improved, and coloring of fibers and deterioration of mechanical properties are also suppressed, which is preferable. The sulfuric acid relative viscosity is more preferably 2.6 or more and 4.8 or less, still more preferably 2.8 or more and 4.5 or less. The sulfuric acid relative viscosity referred to herein is a value measured by a method described later.

The sulfuric acid relative viscosity of the polyamide fiber of the present invention is preferably 2.5 or more and 4.5 or less, more preferably 3.0 or more and 4.2 or less, still more preferably 3.2 or more and 4.0 or less. When the sulfuric acid relative viscosity of the polyamide fiber is lower than 2.5, sufficient crystal orientation cannot be obtained, and not only the strength of such a fiber decreases but also the boiling water shrinkage rate increases. If it exceeds 4.5, the yarn making property is deteriorated.

The polyamide resin used in the present invention preferably has a high melting point as an index of heat resistance. The melting point is preferably 220°C or more, more preferably 240°C or more.

To the polyamide resin used in the present invention, other components such as an antioxidant, a heat stabilizer (hindered phenol, hydroquinone, and phosphite heat stabilizers and substitution products thereof, copper halides, iodine compounds, and the like), a weathering agent (resorcinol, salicylate, benzotriazole, benzophenone, and hindered amine, and the like), a lubricant, a pigment, a dye, a plasticizer, an antistatic agent, and a flame retardant can be added at any time as long as the object of the present invention is not impaired.

When the polyamide resin is a polyamide resin in which the number of carbon atoms in a carbon chain other than an amide bond is a multiple as in nylon 410 (polyamide 410) and nylon 1012 (polyamide 1012), the carbon chain becomes a repeating unit, and therefore the polyamide resin is strong and has a high degree of crystallinity, which is preferable. It is desirable to design such that the number of carbon atoms of the aliphatic diamine and the number of carbon atoms of the dicarboxylic acid are the same or one of the numbers is a multiple of the other, but nylon 410 is suitable in terms of price and supply and is more preferable from an industrial viewpoint.

The polyamide fiber of the present invention is obtained by forming the group polyamide resin into a fiber by a known method and is preferably produced by melt spinning from the viewpoint of reducing the environmental load.

The form of the polyamide fiber of the present invention is not particularly limited but is preferably a filament.

The filament is a generic term for fibers having a length of as long as several tens of millions of meters, and the long filament is industrially beneficial in producing a woven or knitted fabric. The number of filaments is not particularly limited regardless of whether the filaments are monofilaments or multifilaments, and is appropriately selected according to the product use.

The polyamide fiber according to the present invention is preferably 6 cN/dtex or more and 10 cN/dtex or less in tensile strength. When the tensile strength is 6 cN/dtex or more, the passability and handleability in high-order processing steps such as weaving and knitting are improved, and for example, fuzz is hardly generated even if the weaving tension in the weaving step is increased, and a high-density woven fabric can be obtained with good process passability.

The tensile strength is more preferably 6.5 cN/dtex or more, still more preferably 7.0 cN/dtex or more. The strength is preferably as high as possible, but when fibers having too high strength are to be produced, yarn breakage and fuzz tend to occur in the spinning step or the stretching step. Therefore, the tensile strength is preferably 10 cN/dtex or less.

The tensile elongation of the polyamide fiber of the present invention is not particularly limited but may be adjusted to an appropriate value depending on the application, and the tensile elongation is preferably 15% or more and 35% or less. When the tensile elongation is 15% or more, generation of fuzz can be suppressed in the spinning and stretching steps, and passability in high-order steps such as twisting, warping, weaving, and knitting steps after the spinning and stretching steps is improved. In order to suppress deformation of the fiber under low stress and to prevent dyeing defects of a final product due to tight picks and the like during weaving, the tensile elongation is preferably 35% or less, more preferably 20% or more and 28% or less.

The boiling water shrinkage rate of the polyamide fiber of the present invention is required to be 1.0% or more and 5.0% or less. If the boiling water shrinkage rate exceeds 5.0%, slippage or deformation of the woven or knitted fabric may be caused due to shrinkage during dyeing. On the other hand, when the boiling water shrinkage rate is less than 1.0%, the weaving density cannot be increased by thermally shrinking the woven or knitted fabric, and it becomes difficult to suppress the weaving tension in the weaving step within an appropriate range to produce a high-density woven fabric. Furthermore, the boiling water shrinkage rate is more preferably 1.5% or more and 4.0% or less, particularly preferably 1.5% or more and 3.0% or less.

In the polyamide fiber of the present invention, the difference between the boiling water shrinkage rate and the dry heat shrinkage rate needs to be in the range of -1.5% or more and 1.5% or less. By suppressing the difference between the boiling water shrinkage rate and the dry heat shrinkage rate within this range, it is possible to match the state of dry heat shrinkage in the weaving step when the woven or knitted fabric is formed with the state of hot water shrinkage such as dyeing. As a result, a woven or knitted fabric having few defects in high-order processing can be produced with good process passability, and a high-quality product can be obtained. The difference between the boiling water shrinkage rate and the dry heat shrinkage rate is more preferably in the range of -1.5% or more and 1.0% or less, still more preferably in the range of -1.5% or more and -0.1% or less. Biobased fibers using a biomass plastic tend to have lower mechanical characteristics and the like than conventional (petroleum-derived) fibers, but when processed into a woven or knitted fabric, fibers that can provide a processed state similar to that of conventional fibers can be obtained by setting the boiling water shrinkage rate and the difference between the boiling water shrinkage rate and the dry heat shrinkage rate within certain ranges as described above.

In order to reduce the difference between the boiling water shrinkage rate and the dry heat shrinkage rate as described above, it is important to uniformly orient the molecular chains of the polyamide fiber and form a large amount of highly dense oriented crystal phases. As a result of intensive studies, the present inventors have found that by adjusting the moisture content of the chips to be in the range of 0.1 to 0.5%, the uniformity of the molecular chain length and the stretchability in the stretched part can be dramatically improved as compared with the conventional technique, the degree of orientation of polyamide molecules can be increased, and oriented crystal phases having high denseness can be formed. By adding moisture to the chips, hydrogen bonds in the molecule and between molecules before stretching are relaxed, entanglement of molecular chains is released, and molecular chain lengths can be equalized. It is presumed that, by equalizing the molecular chain lengths, the interaction forces (physical entanglement force, hydrogen bonding force, van der Waals force, and the like) of the molecular chains become equal, and therefore spinning stress and stretching stress are uniformly applied to the molecular chains in the yarn making process, so that the molecular chains of the amorphous chains are uniformly oriented, and the formation of oriented crystal phases having high denseness can be promoted. In addition, due to the effect that the molecular chains are uniformly oriented, a large number of amorphous chains (tie molecules) connecting the crystal phases are present in the amorphous phase, and the molecular chain lengths of the tie molecules are also relatively equal. Therefore, it is presumed that many of the amorphous chains are present in a tense state (movement thereof is restricted by the crystal phases). That is, it is presumed that since a large amount of oriented crystal phases having high denseness are contained and the crystal phases are connected by a large number of tense tie molecules, these conditions act synergistically to provide a polyamide fiber having high strength, a small boiling water shrinkage rate, and little variation in molecular orientation and crystal size.

Since the polyamide fiber of the present invention is required to contain a large amount of highly dense oriented crystal phases as described above, the birefringence $\Delta n$, which is an index of the degree of orientation of the polyamide fiber, is preferably in the range of $40 \times 10^{-3} \leq \Delta n \leq 70 \times 10^{-3}$. The range is more preferably $40 \times 10^{-3} \leq \Delta n \leq 65 \times 10^{-3}$, particularly preferably $45 \times 10^{-3} \leq \Delta n \leq 60 \times 10^{-3}$.

In addition, in order to increase the degree of molecular orientation, it is necessary to increase the orientation of the tie molecules connecting the crystal molecules, and it is necessary to allow the crystal molecules to exist at a short distance. As an index thereof, a crystal size (major axis portion) of the polyamide fiber by X-ray diffraction can be used, and the polyamide fiber of the present invention preferably contains large crystals having a crystal size (major axis portion) of 5 nm or more by X-ray diffraction.

In order to obtain the crystal orientation as described above, it is necessary to grow polyamide crystals, and for this purpose, it is important to allow moisture to exist in the polyamide molecules and to suppress excessive concentration of stress during crystal orientation.

The polyamide fiber having such characteristics is characterized in that the MFR value as measured by an MFR measurement by adding 0.00 to 3.00% of moisture and melting the mixture at a temperature of the melting point + 25°C reaches a minimum value in the moisture content range of 0.50 to 2.50%. When the minimum value is within this range, it can be said that the polyamide fiber is hardly affected by moisture, and therefore crystal orientation that is hardly relaxed can be obtained.

The present inventors have found that the strength and elongation and the fuzz grade of the polyamide fiber are dramatically improved by adjusting the moisture content of the polyamide resin chips (raw material chips) used in the present invention to the range of 0.1% to 0.5%. When the moisture content is less than 0.1%, the fuzz grade is deteriorated. In addition, when the moisture content exceeds 0.5%, the melt viscosity of the molten polymer is greatly reduced, so that the spinnability is deteriorated, and a satisfactory yarn cannot be obtained. The moisture content is more preferably 0.15% to 0.35%, particularly preferably 0.15 to 0.25%. The method for adjusting the moisture content is not particularly limited, but examples thereof include a method of adding lightened water to dried chips and stirring the chips.

The total fineness, the single fiber fineness, and the number of filaments of the polyamide fiber of the present invention are not particularly limited but may be appropriately determined according to the application. For example, when a yarn having a large total fineness is required, the yarns may be appropriately doubled and used, and it is not necessary to produce a multifilament having a large total fineness using large yarn making equipment.

The method for processing the fiber is not particularly limited and may be appropriately selected according to the use and the number of fibers. For example, a method may be selected in which spun yarns are cooled, an oil for improving processability is applied, and then the spun yarns are entangled and stretched to be wound.

EXAMPLES

Hereinafter, the present invention will be described in detail with reference to examples. However, the present invention is not limited by these examples at all. The measurement method of each measured value in the examples is as follows.

(1) ASTM D6866 Standard: The $^{14}C$ concentration of $CO_2$ generated by oxidizing the sample is measured, $CO_2$ is sent into an AMS device, and the biomass content is calculated from the ratio of $^{14}C$ to stable isotopes ($^{12}C$ and $^{13}C$).

(2) Sulfuric Acid Relative Viscosity ($\eta r$): Using polymer chips as a sample, 0.25 g of the sample was dissolved in 25 mL of 98% sulfuric acid, the solution was measured at 25°C using an Ostwald viscometer, and the viscosity was determined from the following formula. The measured value was calculated from the average value of five samples. $\eta r$ = the number of seconds that the sample solution flows down/the number of seconds that only sulfuric acid flows down.

(3) Strength/Elongation (in Dry State): The measurement was performed under constant speed elongation conditions defined in JIS L 1013 (1999) 8.5.1, Standard Time Test. A sample was measured using "TENSILON" UCT-100 manufactured by ORIENTEC CORPORATION, at a holding interval of 250 mm and a tensile speed of 300 mm/min. The strength was determined by dividing the maximum strength in the S-S curve by the total fineness (JIS L 1013 (1999) 8.3.1 Method A).

(4) Boiling Water Shrinkage Rate: The original yarn was sampled in a skein shape and adjusted in a temperature and humidity control chamber at 20°C and 65% RH for 24 hours or more, and a load corresponding to 0.045 cN/dtex was applied to the sample to measure a length L0. Next, this sample was immersed in boiling water in an untensioned state for 30 minutes and then air-dried in the temperature and humidity control chamber for 4 hours, and a load corresponding to 0.045 cN/dtex was applied to the sample again to measure a length L1. From the lengths L0 and L1, the boiling water shrinkage rate was determined by the following formula. Boiling water shrinkage rate = [(L0 - L1)/L0] $\times$ 100 (%)

(5) Dry heat shrinkage rate: The dry heat shrinkage rate of a yarn was measured according to ASTM D4974-93 (2004) with a predetermined load at the time of measurement as total fineness $\times$ (4.4 $\pm$ 0.88) mN and a treatment temperature as 150°C.

(6) Birefringence $\Delta n$: Measurement was performed using a molecular orientation measurement device (Type: DELT_N-IIH) manufactured by INTEC Co., Ltd. Paraffin was added dropwise to a slide glass, one filament single fiber was placed on the slide glass, and the slide glass was covered with a cover glass from above. The slide glass was set in a polarizing microscope, and both ends of the single yarn were focused. A waveplate was inserted into the microscope to adjust a wavelength $\lambda$ at which black stripes were generated at both ends of the single yarn. In this measurement, waveplates were combined to achieve 2.5$\lambda$. Thereafter, a single yarn diameter D was measured by image processing. Subsequently, a distance L between two black interference fringes existing on both sides was measured.

In principle, $\Delta n$ is obtained by $\Delta n = R/d$ (R: optical path difference, d: transmission distance), but in the present device, $\Delta n$ is automatically calculated by measuring the optical path difference R from the wavelength of the waveplate and the single yarn diameter D and the interval L of the black interference fringes by image processing.

(7) Crystal Size by X-Ray Diffraction (Major Axis Portion): The crystal size (major axis portion) of the yarn was measured by X-ray diffraction using an X-ray diffractometer (RINT-TTR3 manufactured by Rigaku Corporation, Cu-K$\alpha$ ray, tube voltage: 40 kV, current: 300 mA, parallel beam method). From the half width of the intensity distribution curve of the equatorial line scanning from the wide angle X-ray diffraction, it was obtained using the Scherrer equation.

(8) Measurement of Minimum Value of Fluidity: Using a melt indexer F-F01 manufactured by Toyo Seiki Seisaku-sho, Ltd., 0.00 to 3.00% of moisture was added to the polyamide fiber, the polyamide fiber was melted at the melting point + 25°C, the MFR was measured, the values of the respective moisture contents were plotted, and the minimum value was measured. That is, samples having different moisture contents in the moisture range of 0.00 to 3.00% were prepared, the MFR values were measured, the measurement results were graphed, and it was confirmed whether a change in fluidity due to moisture reached a minimum value in the moisture content range of 0.50 to 2.50%.

(9) Moisture Content: The moisture content was measured using a combination of a moisture measurement device AQ-2200 available from HIRANUMA Co., Ltd. (former Hiranuma Sangyo Co., Ltd.) and a moisture vaporizer EV-2000 available from HIRANUMA Co., Ltd. (former Hiranuma Sangyo Co., Ltd.). That is, the moisture in the sample chips was extracted using EV-2000, and the moisture content was measured using AQ-2200. The sample weighed 1.5 g, and the nitrogen used for moisture vaporization was 0.2 L/min.

The measurement conditions were as follows.

- Step 1: Temperature 210°C, time 21 minutes
- Pre-heating: time 0 minutes
- End: B.G. 0 µg
- Cooling time: 1 minute
- B.G. count: 30
- Back purge time: 20 seconds.

[Example 1]

A 5-wt% aqueous solution of copper acetate as an antioxidant was added to and mixed with polyamide 410 chips having a biobased content of 71% in which the dicarboxylic acid had a biobased content of 100% obtained by thermal melt polymerization, and 70 ppm of copper was added and adsorbed relative to the polymer weight. Next, a 50-wt% aqueous solution of potassium iodide and a 20-wt% aqueous solution of potassium bromide were each added and adsorbed so as to be 0.1 parts by weight as potassium with respect to 100 parts by weight of the polymer chips, solid-phase polymerization was performed using a solid-phase polymerization apparatus, and then 0.22% of moisture was added to obtain nylon 410 chips having a sulfuric acid relative viscosity and a moisture content in Table 1.

As a spinning device, a melt spinning device using an extruder was used, the nylon 410 chips were melted with the extruder under vacuum, and the discharge amount was adjusted with a metering pump so that the total fineness was about 470 dtex. The spinning temperature was 290°C, and the product was filtered through a metal nonwoven fabric filter in a spinning pack and then spun through a spinneret having 72 holes. The spun yarns were passed through a heating cylinder heated to a temperature of 250°C and then cooled and solidified by cooling air at an air speed of 40 m/min. A non-water-containing treatment agent was applied to the cooled and solidified yarns, the yarns were swirled by a spinning take-up roller to take up the yarns, and the yarns were stretched at a total stretch ratio of 4.98 times. The taken-up yarns were then subjected to 5% stretching between a take-up roller and a yarn feeding roller without being wound up once, then subjected to first stage stretching between the yarn feeding roller and a first stretching roller so that the rotation speed ratio between the rollers was 2.88, and subsequently subjected to second stage stretching between the first stretching roller and a second stretching roller so that the rotation speed ratio between the rollers was 1.35.

Furthermore, third stage stretching was performed between the second stretching roller and a third stretching roller, subsequently a 7% relaxation heat treatment was performed between the third stretching roller and a relaxation roller, and the yarns were entangled with an entangling device and then wound up with a winding machine at a speed of 2,790 m/min. The surface temperature of each roller was set so that the take-up roller was at room temperature, the yarn feeding roller at 53°C, the first stretching roller at 150°C, the second stretching roller at 190°C, the third stretching roller at 222°C, and the relaxation roller at 144°C.

The entangling treatment was performed by injecting high-pressure air from a direction perpendicular to the traveling yarns in the entangling device. A guide for regulating the traveling yarns was provided before and after the entangling device, and the pressure of the injected air was constant at 0.4 MPa.

The characteristics of the obtained polyamide fiber are as shown in Table 1.

[Example 2]

Production was carried out in the same manner as in Example 1, except that the moisture content of the polyamide resin chips was changed to 0.18%, the total fineness was changed to 940 dtex, the number of filaments was changed to 144, and the total stretch ratio was changed to the value shown in Table 1.

[Example 3]

Production was carried out in the same manner as in Example 1, except that the moisture content of the polyamide resin chips was changed to 0.15%, the total fineness was changed to 1,400 dtex, the number of filaments was changed to 204, and the total stretch ratio was changed to the value shown in Table 1.

[Example 4]

Production was carried out in the same manner as in Example 1, except that the moisture content of the polyamide resin chips was changed to 0.10%, the number of filaments was changed to 136, and the total stretch ratio was changed to the value shown in Table 1.

[Example 5]

Production was carried out in the same manner as in Example 1, except that the moisture content of the polyamide resin chips was changed to 0.31%, and the total stretch ratio was changed to the value shown in Table 1.

[Example 6]

Production was carried out in the same manner as in Example 1, except that the moisture content of the polyamide resin chips was changed to 0.45%, and the total stretch ratio was changed to the value shown in Table 1.

[Example 7]

Production was carried out in the same manner as in Example 1, except that the sulfuric acid relative viscosity of the polyamide resin chips was changed to 4.2, and the total stretch ratio was changed to the value shown in Table 1.

[Comparative Example 1]

Production was carried out in the same manner as in Example 1, except that the moisture content of the polyamide resin chips was changed to 0.02%, and the total stretch ratio was changed to the value shown in Table 2. The characteristics of the obtained polyamide fiber are as shown in Table 2.

[Comparative Example 2]

Production was carried out in the same manner as in Example 1, except that the sulfuric acid relative viscosity of the polyamide resin chips was changed to 3.9, the moisture content was changed to 0.02%, the total fineness was changed to 350 dtex, the number of filaments was changed to 18, and the total stretch ratio was changed to the value shown in Table 2.

[Comparative Example 3]

Production was carried out in the same manner as in Example 1 except that the moisture content of the polyamide resin chips was changed to 0.60%, but spinning was not possible, so that a fiber was not obtained.

[Comparative Example 4]

Production was carried out in the same manner as in Example 1, except that the polyamide resin was changed to nylon 610 having a biobased content of 63%, the sulfuric acid relative viscosity of the chips was changed to 3.7, the moisture content was changed to 0.28%, and the total stretch ratio was changed to the value shown in Table 2.

[Comparative Example 5]

Production was carried out in the same manner as in Example 1, except that the polyamide resin was changed to nylon 66 having a biobased content of 0%, the moisture content of the chips was changed to 0.08%, and the total stretch ratio was changed to the value shown in Table 2.

[Comparative Example 6]

Production was carried out in the same manner as in Example 1, except that the polyamide resin was changed to nylon 6 having a biobased content of 0%, the moisture content of the chips was changed to 0.02%, the total fineness was changed to 940 dtex, the number of filaments was changed to 136, and the total stretch ratio was changed to the value shown in Table 2.

[Comparative Example 7]

The same method as in Example 1 was carried out, except that the polyamide resin was changed to nylon 66 having a biobased content of 0%, the sulfuric acid relative viscosity of the chips was changed to 3.8, and the moisture content was changed to 0.25%, but spinning was not possible, so that a fiber was not obtained.

[Comparative Example 8]

The same method as in Example 1 was carried out, except that the polyamide resin was changed to nylon 6 having a biobased content of 0%, the sulfuric acid relative viscosity of the chips was changed to 3.8, and the moisture content was changed to 0.25%, but spinning was not possible, so that a fiber was not obtained.

[Table 1-1]

| | | Example 1 | Example 2 | Example 3 | Example 4 |
|---|---|---|---|---|---|
| Polyamide type | - | N410 | N410 | N410 | N410 |
| Biobased content (fiber) | % | 71 | 71 | 71 | 71 |
| Sulfuric acid relative viscosity (chip) | - | 3.8 | 3.8 | 3.8 | 3.8 |
| Moisture content (chip) | % | 0.22 | 0.18 | 0.15 | 0.10 |
| Total fineness | dtex | 470 | 940 | 1400 | 470 |
| Number of filaments | Filament | 72 | 144 | 204 | 136 |
| Strength | cN/dtex | 8.3 | 8.1 | 7.8 | 7.8 |
| Elongation | % | 22 | 22 | 22 | 20 |
| Boiling water shrinkage rate | % | 2.8 | 2.9 | 3.4 | 4.8 |
| Dry heat shrinkage rate | % | 3.7 | 3.8 | 4.7 | 4.0 |
| Boiling water shrinkage rate - dry heat shrinkage rate | % | -0.9 | -0.9 | -1.3 | 0.8 |
| Birefringence $\Delta$n | $\times 10^{-3}$ | 54.0 | 53.5 | 52.0 | 46.0 |
| Crystal size | Å | 60 | 59 | 56 | 48 |
| Moisture content at minimum value of fluidity | % | 1.2 | 1.2 | 1.2 | 1.2 |
| Total stretch ratio | - | 4.98 | 5.10 | 5.31 | 4.67 |
| N410: nylon 410, N610: nylon 610, N66: nylon 66, N6: nylon 6 | | | | | |

[Table 1-2]

| | | Example 5 | Example 6 | Example 7 |
|---|---|---|---|---|
| Polyamide type | - | N410 | N410 | N410 |
| Biobased content (fiber) | % | 71 | 71 | 71 |
| Sulfuric acid relative viscosity (chip) | - | 3.8 | 3.8 | 4.2 |
| Moisture content (chip) | % | 0.31 | 0.45 | 0.22 |
| Total fineness | dtex | 470 | 470 | 470 |
| Number of filaments | Filament | 72 | 72 | 72 |
| Strength | cN/dtex | 7.8 | 8.0 | 8.5 |
| Elongation | % | 21 | 20 | 15 |
| Boiling water shrinkage rate | % | 4.0 | 4.6 | 3.0 |
| Dry heat shrinkage rate | % | 5.3 | 4.0 | 3.5 |
| Boiling water shrinkage rate - dry heat shrinkage rate | % | -1.3 | 0.6 | -0.5 |
| Birefringence $\Delta$n | $\times 10^{-3}$ | 51.0 | 50.0 | 61.0 |
| Crystal size | Å | 56 | 56 | 62 |
| Moisture content at minimum value of fluidity | % | 1.2 | 1.2 | 1.8 |
| Total stretch ratio | - | 5.10 | 5.31 | 4.84 |
| N410: nylon 410, N610: nylon 610, N66: nylon 66, N6: nylon 6 | | | | |

[Table 2-1]

| | | Comparative Example 1 | Comparative Example 2 | Comparative Example 3 | Comparative Example 4 |
|---|---|---|---|---|---|
| Polyamide type | - | N410 | N410 | N410 | N610 |
| Biobased content (fiber) | % | 71 | 71 | 71 | 63 |
| Sulfuric acid relative viscosity (chip) | - | 3.8 | 3.9 | 3.8 | 3.7 |
| Moisture content (chip) | % | 0.02 | 0.02 | 0.60 | 0.28 |

(continued)

|  |  | Comparative Example 1 | Comparative Example 2 | Comparative Example 3 | Comparative Example 4 |
|---|---|---|---|---|---|
| Total fineness | dtex | 470 | 350 |  | 470 |
| Number of filaments | Filament | 72 | 18 |  | 72 |
| Strength | cN/dtex | 7.5 | 7.8 |  | 8.5 |
| Elongation | % | 19 | 17.5 |  | 24 |
| Boiling water shrinkage rate | % | 3.3 | 4.6 |  | 3.9 |
| Dry heat shrinkage rate | % | 6.3 | 7.8 |  | 7.4 |
| Boiling water shrinkage rate - dry heat shrinkage rate | % | -3.0 | -3.2 | Spinning impossible | -3.5 |
| Birefringence $\Delta n$ | $\times 10^{-3}$ | 35 | 36 |  | 55 |
| Crystal size | Å | 40 | 41 |  | 50 |
| Moisture content at minimum value of fluidity | % | 0.8 | 0.8 |  | 0.7 |
| Total stretch ratio | - | 4.71 | 4.19 |  | 4.61 |
| N410: nylon 410, N610: nylon 610, N66: nylon 66, N6: nylon 6 | | | | | |

[Table 2-2]

|  |  | Comparative Example 5 | Comparative Example 6 | Comparative Example 7 | Comparative Example 8 |
|---|---|---|---|---|---|
| Polyamide type | - | N66 | N6 | N66 | N6 |
| Biobased content (fiber) | % | 0 | 0 | 0 | 0 |
| Sulfuric acid relative viscosity (chip) | - | 3.8 | 3.8 | 3.8 | 3.8 |
| Moisture content (chip) | % | 0.08 | 0.02 | 0.25 | 0.25 |
| Total fineness | dtex | 470 | 940 |  |  |
| Number of filaments | Filament | 72 | 136 |  |  |
| Strength | cN/dtex | 8.5 | 8.5 |  |  |
| Elongation | % | 24 | 25 |  |  |
| Boiling water shrinkage rate | % | 6.2 | 10.5 |  |  |
| Dry heat shrinkage rate | % | 4.2 | 7.0 |  |  |
| Boiling water shrinkage rate - dry heat shrinkage rate | % | 2.0 | 3.5 | Spinning impossible | Spinning impossible |
| Birefringence $\Delta n$ | $\times 10^{-3}$ | 58 | 52 |  |  |
| Crystal size | Å | 60 | 58 |  |  |
| Moisture content at minimum value of fluidity | % | 0.2 | 0.2 |  |  |
| Total stretch ratio | - | 4.50 | 4.69 |  |  |
| N410: nylon 410, N610: nylon 610, N66: nylon 66, N6: nylon 6 | | | | | |

The production conditions in Examples 1 to 7 and Comparative Examples 1 to 8 and the results of evaluating the physical properties of the obtained polyamide fibers are shown in Tables 1 and 2.

As is clear from Tables 1 and 2, the polyamide fiber of the present invention achieves high strength and keeping the boiling water-dry heat shrinkage rate within certain ranges while using a biomass plastic.

On the other hand, conventional polyamide fibers using a biomass plastic shown in Comparative Examples 1, 2, and 4 have relatively high strength but have a large difference between the boiling water shrinkage rate and the dry heat shrinkage rate, which is disadvantageous during processing of a woven or knitted fabric.

In Comparative Example 3, since the moisture content of the chips was excessively increased, the spinnability was deteriorated, resulting in unstable spinning.

Conventional aliphatic polyamide fibers shown in Comparative Examples 5 and 6 have high strength but have a high boiling water shrinkage rate and a large difference between the boiling water shrinkage rate and the dry heat shrinkage rate, which is disadvantageous during processing of a woven or knitted fabric. When the moisture content of the chips of the conventional aliphatic polyamide was increased as in Comparative Examples 7 and 8, the spinnability was deteriorated, resulting in unstable spinning.

When the moisture content of the chips was controlled within an appropriate range as in Examples 2 to 6, oriented crystal phases having high denseness could be formed, and as a result, a polyamide fiber having a low boiling water shrinkage rate and a small difference between the boiling water shrinkage rate and the dry heat shrinkage rate could be obtained.

## Claims

1. A polyamide fiber comprising a polyamide resin obtained by polycondensation of an aliphatic diamine and a dicarboxylic acid,

    wherein the aliphatic diamine and/or the dicarboxylic acid is a straight-chain monomer having a carbon chain of C9 or more,
    a biobased content as measured in accordance with ASTM D6866 standard is 50% or more, and
    following Formulae (1) and (2) are satisfied:

    (1) $1.0 \leq$ boiling water shrinkage rate [%] $\leq 5.0$;
    (2) $-1.5 \leq$ boiling water shrinkage rate [%] - dry heat shrinkage rate [%] $\leq 1.5$.

2. The polyamide fiber according to claim 1, satisfying following Formulae (1) to (3):

    (1) $6 \leq$ tensile strength [cN/dtex] $\leq 10$;
    (2) $15 \leq$ tensile elongation [%] $\leq 35$;
    (3) $2.5 \leq$ sulfuric acid relative viscosity $\leq 4.5$.

3. The polyamide fiber according to claim 1 or 2, wherein a birefringence $\Delta n$ is in a range of $40 \times 10^{-3} \leq \Delta n \leq 70 \times 10^{-3}$.

4. The polyamide fiber according to claim 1 or 2, wherein a melt flow rate (MFR) value as measured by an MFR measurement by adding 0.00 to 3.00% of moisture and melting the mixture at a temperature of a melting point + 25°C reaches a minimum value in a moisture content range of 0.50 to 2.50%.

5. The polyamide fiber according to claim 1 or 2, wherein a crystal size (major axis portion) determined by X-ray diffraction is 5 nm or more.

6. The polyamide fiber according to claim 1 or 2, wherein the polyamide resin is nylon 410.

7. A woven fabric for an airbag, comprising the polyamide fiber according to claim 1 or 2.

8. A tire cord comprising the polyamide fiber according to claim 1 or 2.

9. A racket string comprising the polyamide fiber according to claim 1 or 2.

10. A V-ribbed belt comprising the polyamide fiber according to claim 1 or 2.

11. A woven fabric for a bag fabric, comprising the polyamide fiber according to claim 1 or 2.

**12.** A woven fabric for a garment, comprising the polyamide fiber according to claim 1 or 2.

**EP 4 442 873 A1**

## INTERNATIONAL SEARCH REPORT

| | International application No. |
|---|---|
| | **PCT/JP2022/043168** |

### A. CLASSIFICATION OF SUBJECT MATTER

***D01F 6/60***(2006.01)i
 FI:   D01F6/60 351

According to International Patent Classification (IPC) or to both national classification and IPC

### B. FIELDS SEARCHED

Minimum documentation searched (classification system followed by classification symbols)

   B60C1/00-19/12, D01F1/00-6/96, D01F9/00-9/04, D02G1/00-3/48, D02J1/00-13/00

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

   JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | WO 2021/008942 A1 (PHP FIBERS GMBH) 21 January 2021 (2021-01-21)<br>   claims, page 4, lines 7-24 | 1-12 |
| Y | JP 09-279437 A (TORAY IND., INC.) 28 October 1997 (1997-10-28)<br>   claims, paragraph [0012], examples | 1-7 |
| Y | JP 2019-511411 A (CONTINENTAL REIFEN DEUTSCHLAND GMBH) 25 April 2019<br>(2019-04-25)<br>   claims, paragraph [0016] | 1-6, 8 |
| Y | JP 58-132108 A (UNITIKA KK) 06 August 1983 (1983-08-06)<br>   page 1, lower right column, lines 5-11, page 2, upper left column, lines 11-14, page 2,<br>   lower right column, lines 9-12, examples, table 3 | 1-6, 8 |
| Y | WO 2021/088250 A1 (CATHAY BIOTECH INC.) 14 May 2021 (2021-05-14)<br>   claims, examples, table 2 | 1-5, 7-12 |
| A | JP 2013-049930 A (TORAY IND., INC.) 14 March 2013 (2013-03-14) | 1-12 |
| A | WO 2017/082255 A1 (TORAY IND., INC.) 18 May 2017 (2017-05-18) | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/043168**

| Patent document cited in search report | | | Publication date (day/month/year) | Patent family member(s) | | | Publication date (day/month/year) |
|---|---|---|---|---|---|---|---|
| WO | 2021/008942 | A1 | 21 January 2021 | US | 2022/0259775 | A1 | |
| | | | | claims, paragraphs [0017]-[0027] | | | |
| | | | | EP | 4018025 | A1 | |
| | | | | CN | 114096702 | A | |
| | | | | KR | 10-2022-0034125 | A | |
| JP | 09-279437 | A | 28 October 1997 | (Family: none) | | | |
| JP | 2019-511411 | A | 25 April 2019 | US | 2019/0077194 | A1 | |
| | | | | claims, paragraph [0017] | | | |
| | | | | EP | 3500698 | A1 | |
| | | | | DE | 102016204423 | A | |
| | | | | CN | 109121424 | A | |
| JP | 58-132108 | A | 06 August 1983 | (Family: none) | | | |
| WO | 2021/088250 | A1 | 14 May 2021 | EP | 4095292 | A1 | |
| | | | | claims, paragraphs [0059]-[0120], table 3 | | | |
| | | | | CN | 112779622 | A | |
| | | | | KR | 10-2022-0101647 | A | |
| | | | | JP | 2023-502885 | A | |
| JP | 2013-049930 | A | 14 March 2013 | (Family: none) | | | |
| WO | 2017/082255 | A1 | 18 May 2017 | US | 2018/0327933 | A1 | |
| | | | | EP | 3375917 | A1 | |
| | | | | KR | 10-2018-0079326 | A | |
| | | | | CN | 108350607 | A | |

Form PCT/ISA/210 (patent family annex) (January 2015)

**EP 4 442 873 A1**

**REFERENCES CITED IN THE DESCRIPTION**

**Patent documents cited in the description**

- JP 2000154426 A
- JP 2016203777 A
- JP 2019065433 A
- JP 2013049930 A
- JP 2019148016 A